# EUROPEAN PATENT APPLICATION

(11) **EP 1 406 196 A2**
(43) Date of publication of application: **07.04.2004**
(21) Application number: 03256140.9
(22) Date of filing: 29.09.2003
(51) Int. Cl.: G06F 17/60

(54) **User manual provision**

(30) Priority: 01.10.2002 KR 2002059771
(71) Applicant: SAMSUNG ELECTRONICS CO., LTD., Suwon-City, Kyungki-do (KR)
(72) Inventor: Kim, Hyuck, Seongnam-si, Gyeonggi-do (KR)
(74) Representative: Geary, Stuart Lloyd

(57) **Abstract**

An image output apparatus and method to download and output a user manual of an printer in real-time via a network. The method includes receiving a request for a user manual corresponding to a predetermined operation function of the image output apparatus; creating product and function codes of the image output apparatus based on the request information related to the user manual; transmitting the created product and function codes to the server to provide the user manual via the network; and receiving user manual information corresponding to the transmitted product and function codes from the server and outputting the user manual information in a predetermined format.

## Description

The present invention relates to user manual information provision, and in particular to methods of providing a user manual relating to a network-connected image output apparatus; to a method of operating a server connected to a network; to image output apparatus connectable to a network; and to a network-connectable server.

Generally, manufacturers of electronic and other goods provide buyers with user manuals including installation and operation methods, function descriptions, notices, etc., in a booklet form, along with their products. However, user manuals provided in paper form can be lost, which can cause numerous problems. Paper user manuals also involve a printing cost per manual, as well as the cost of generating the manual. Also, as more functions are added to electronic products, the more difficult it becomes for the user to search for help relating to desired functions in the paper version of the user manual.

The present invention aims to ameliorate these problems with the provision of user manual information relating to image output apparatus.

According to a first aspect of the present invention, a method of providing a user manual relating to a network-connected image output apparatus, is characterised by comprising: receiving a user input requesting a user manual for a function of the image output apparatus; generating a request including information identifying the apparatus or its type and information identifying the function; transmitting the request to a server via the network; subsequently receiving user manual information from the server; and providing the user manual information to the user.

According to a second aspect of the invention, a method of operating a server connected to a network, is characterised by comprising: receiving a request for user manual information relating to an image output apparatus via the network, the request containing information identifying the apparatus or its type and information identifying a function of that apparatus; searching for user manual information corresponding to the received information; converting resulting user manual information into a suitable data format, and providing the converted user manual information to the image output apparatus via the network.

According to a third aspect of the invention, a method of providing a user manual relating to a network-connected image output apparatus, is characterised by comprising: at the image output apparatus: receiving a user input requesting a user manual for a function of the image output apparatus; generating a request including information identifying the apparatus or its type and information identifying the function; transmitting the request to a server via the network; at the server:
receiving the request for user manual information; searching for user manual information corresponding to the received information; converting resulting user manual information into a suitable data format, and sending the converted user manual information to the image output apparatus via the network, and at the image output apparatus: receiving the user manual information from the server; and
providing the user manual information to the user.

The invention also provides an optical, electrical, electromagnetic or magnetic signal representing machine instructions for controlling computer apparatus to perform any of the above methods. The signal can be recorded on a computer readable medium.

According to a fourth aspect of the invention, image output apparatus connectable to a network, is characterised by comprising: means for receiving a user input requesting a user manual for a function of the image output apparatus; means for generating a request including information identifying the apparatus or its type and information identifying the function; means for transmitting the request to a server; means for providing subsequently received user manual information to the user.

According to a fifth aspect of the invention, a network-connectable server, is characterised by comprising: means for receiving a request for user manual information relating to an image output apparatus via the network, the request containing information identifying the apparatus or its type and information identifying a function of that apparatus; means for searching for user manual information corresponding to the received information; means for converting resulting user manual information into a suitable data format, and means for sending the converted user manual information to the image output apparatus.

The invention is particularly relevant to the provision of user manual information in real-time via a network to image forming apparatus, also describable as image output systems, such as printers and copiers.

The invention will now be described, by way of example only, with reference to the accompanying drawings, of which:
Figure 1 shows a construction of a service system for providing "HELP", according to the present invention;
Figure 2 is a block diagram of image output apparatus forming part of Figure 1;
Figure 3 is a flow chart illustrating operation of the Figure 2 image output apparatus in providing "HELP"; and
Figure 4 is a flow chart illustrating operation of a server forming part of the Figure 1 system.

In the drawings, like reference numerals are used to denote like elements throughout.

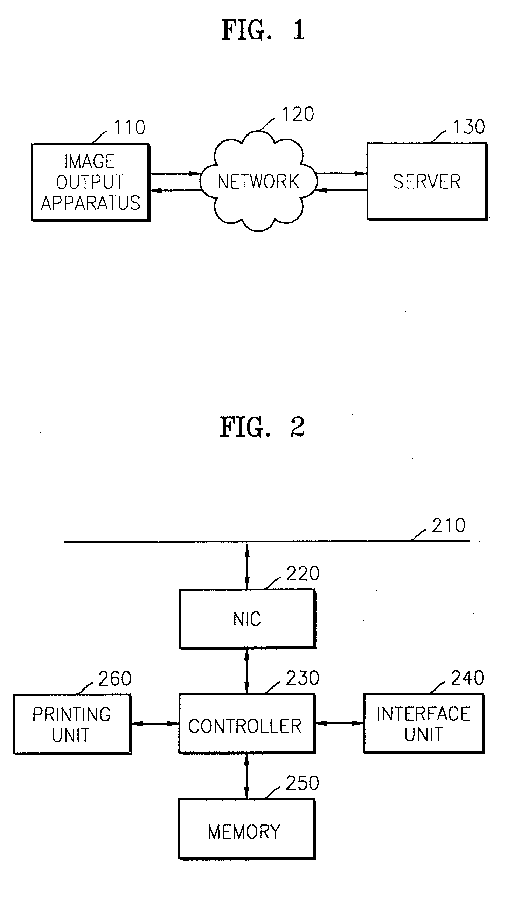

In the system shown in Figure 1, image output apparatus, constituted by a printer 110, and a server 130 are interconnected bi-directionally via a network 120. Generally speaking, if the printer 110 receives a user request for user manual information relating to a desired function, the printer 110 transmits product codes and function codes identifying the apparatus and the function for which user manual information is required to the server 130 via the network 120, and the server transmits appropriate user manual information to the image output apparatus.

The server 130 stores user manual information corresponding to plural different devices in an internal database. If a user requests user manual information relating to an apparatus being operated, for example, the printer 110, the server 130 analyses the product codes and function codes of the printer 110, and transmits the relevant contents of its database to the printer 110 via the network 120.

Referring to Figure 2, in the printer 110, a memory 250 stores information related to the different functions of the printer, a network address of the apparatus (which may take any suitable form), and information specific to the printer, including data formats supported it. A network interface card (NIC) 220 allows access to the network 210, with an interface unit 240 providing modulation and demodulation functions. All these devices are connected to a controller 230. The printer typically is a slave device, controllable by any host (not shown) connected to the network 120.

The controller 230 is responsive to a user request for user manual information to transmit to the server 130 information concerning the printer 110 and information which identifies the function, this being obtained from the memory 250. The controller 230 is operable to receive from the server 130 user manual information user manual information transmitted in response thereto. A printing unit 260 is arranged to print the received user manual information in response to a print command provided by the controller 230.

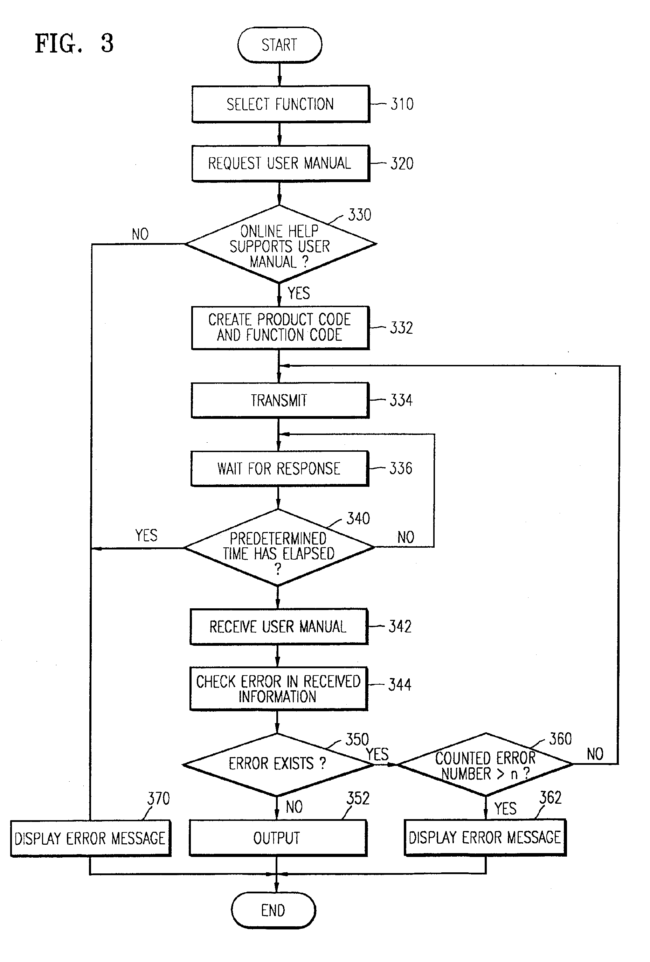

Figure 3 is a flow chart illustrating a method of providing "HELP", through the printer 110. Referring to Figure 3, first, a user selects at step 310 a function button corresponding to a desired operation function using an input device, such as a keypad (not shown). If a request for help is then made, using the keypad for example, user manual information relating to the selected function is requested at step 320. At step 330, it is checked whether online "HELP" supports the selected function. If not , an error message is displayed at step 370. Otherwise, the product codes, the code identifying the selected function, the network address of the printer 110, and information identifying output data format(s) supported by the printer 110 are created at step 332.

This information is then transmitted to the server 130 from the printer 110 at step334. Receipt of a completion response from the server 130 is then awaited at step 336. If a response from the server 130 is not received in a predetermined time, this is determined at step 340, and it is inferred that an error has occurred in the network or server, and an error message is displayed at step 370. Otherwise, user manual information is received from the server 130 at step 342. In this case, it is checked whether an error exists in the user manual information at step 344. If no error is found to exist, step 350 causes the received user manual information to be provided at step 352.

This can involve printing the received user manual information, so that it can be viewed by the user who requested the information. Printing can be achieved without being specifically requested by the user. Thus, the user manual information relating to the function of interest is printed at the location of the user (i.e. at the printer 110) simply by the user selecting the function and then requesting help. Alternatively, the received user manual information can be displayed on a display screen (not shown) forming part of the printer 110.

If step 350 determines that an error exists, the number of errors is counted at step 360. If the counted number exceeds a predetermined threshold (n) step 360 causes flow to step 362, where an error message is displayed, for example on a screen or other display (not shown). If the counted number of errors is below the predetermined number (n), a request for the user manual information is retransmitted to the server 130 at step 334.

The printer 110 may also check that received user information relates to the same function as that of the request, and provide an error message if there is no match.

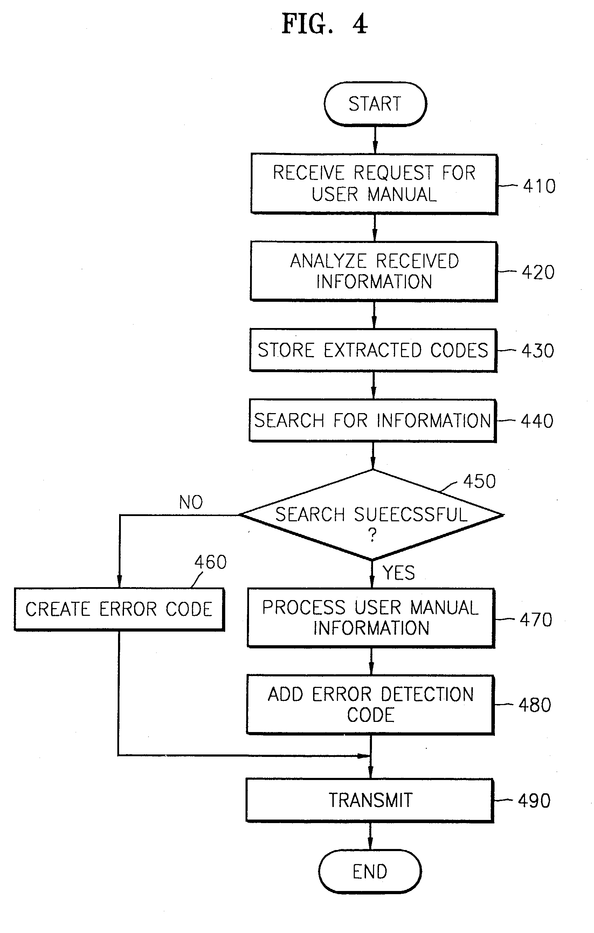

Figure 4 is a flow chart illustrating operation of the server 130 in the method of providing "HELP". Referring to Figure 4, first, a request for user manual information is received from the printer 110 at step 410. The request is analysed at step 420 to extract therefrom the product codes, function code, and network address of the printer 110. This is then stored in a memory (not shown) of the server 130 at step 430. The server 130 then at step 440 searches its internal database for user manual information relating to the relevant function of the relevant product, in this case the printer 110

Then, it is checked whether the information search was successful at step 450. If not, an error code is created at step 460, which is then transmitted to the printer 110 which requested the user manual at step 490. If step 450 determines that the required user manual information is found in the database, the user manual information is converted into a suitable output data format at step 470. A suitable format is one capable of being utilised by the printer 110. The data may be represented as HTML (HyperText Markup Language), PDF (Portable Document Format), PCL (Printer Command Language), POST SCRIPT, etc., depending on the type of the printer 110. One or more suitable data formats are identified in the request received at step 410. Alternatively, though, the server 130 may be able to determine what document format to use from other information, such as information identifying the printer (e.g. its serial number), its network address or the printer type.

At step 480, an error detection code is added to the user manual information so that any error generated during transmission can be detected. Then, at step 490, the user manual information with error detection code is transmitted to the printer 110 which requested the user manual.

The above-described preferred embodiments may be embodied as computer programs stored on permanent or temporary computer readable media. Such a program may be executed by a general-purpose digital computer, or by a dedicated machine. The computer readable media could be magnetic storage media (e.g., ROM's, floppy discs, hard discs, etc.), optically readable media (e.g., CDROMs, DVDs, etc.). The program may be modulated onto a carrier wave, for example to allow transmission over the Internet or other communication channel. The various components needed to implement the invention may be distributed, and communicate via a network.

As described above, a user can directly select the user's desired function and view a user manual of the corresponding function on a screen, thereby easily and quickly obtaining the user's desired information. Further, the user can obtain the user's desired function via a network even in a situation where no paper user manual can be provided, or even exists. By the provision of suitable software or hardware in the server 130 or in the printer 110, a manufacturer can provide speedy service to a user if required. A manufacturer can also obtain or derive additional information, such as the frequency of use, function difficulty level and user manual quality, for the different functions of the printer 110 based on user manual information requested by the user. This could then be used to achieve efficient printer development or performance improvements, etc. Also, using this information, the number of service requests, such as service calls, from users can be reduced, thereby resulting in costs reduction.

The scope of protection is not to be limited to the illustrated embodiments. It will be appreciated that changes may be made in this embodiment without departing from the principles of the invention. For example, although the image output apparatus is described as being constituted by a printer, it may instead be a copier, such as a photocopier, or any other kind of device which can form a permanent image on paper or a paper-like medium.

## Claims

1. A method of providing a user manual relating to a network-connected image output apparatus, **characterised in that** the method comprises:
receiving a user input (320) requesting a user manual for a function of the image output apparatus;
generating a request (332) including information identifying the apparatus or its type and information identifying the function;
transmitting (334) the request to a server via the network;
subsequently receiving (342) user manual information from the server; and
providing (352) the user manual information to the user.

2. A method as claimed in claim 1, in which the providing step comprises automatically printing some or all of the user manual information.

3. A method according to claim 1 or claim 2, in which the information included in the request includes information identifying one or more data formats supported by the apparatus.

4. A method according to any preceding claim, further comprising retransmitting the request (334) if the user manual information is determined to contain one or more errors.

5. A method as claimed in claim 4, comprising determining (360) the number of occurrences of receiving user manual information with errors, and retransmitting the request only if a predetermined threshold is not exceeded.

6. The method of any preceding claim, in which the information included in the request includes a network address of the image output apparatus.

7. A method of operating a server connected to a network, **characterised in that** the method comprises:
receiving (410) a request for user manual information relating to an image output apparatus via the network, the request containing information identifying the apparatus or its type and information identifying a function of that apparatus;
searching (440) for user manual information corresponding to the received information;
converting (470) resulting user manual information into a suitable data format, and
providing (490) the converted user manual information to the image output apparatus via the network.

8. A method according to claim 7, comprising determining the suitable data format from the apparatus type information.

9. A method according to claim 7 or claim 8, further comprising adding (480) an error detection code to the user manual information.

10. A method of providing a user manual relating to a network-connected image output apparatus, **characterised in that** the method comprises:
at the image output apparatus:
receiving (320) a user input requesting a user manual for a function of the image output apparatus;
generating (332) a request including information identifying the apparatus or its type and information identifying the function;
transmitting (334) the request to a server via the network; at the server:
receiving (410) the request for user manual information;
searching (440) for user manual information corresponding to the received information;
converting (470) resulting user manual information into a suitable data format, and
sending (490) the converted user manual information to the image output apparatus via the network, and
at the image output apparatus:
receiving (342) the user manual information from the server; and
providing (352) the user manual information to the user.

11. An optical, electrical, electromagnetic or magnetic signal representing machine instructions for controlling computer apparatus to perform a method according to any of claims 1 to 10.

12. The signal of claim 11 recorded on a computer readable medium.

13. Image output apparatus (110) connectable to a network (120), **characterised in that** the apparatus comprises:
means (230) for receiving a user input requesting a user manual for a function of the image output apparatus;
means for generating a request including information identifying the apparatus or its type and information identifying the function;
means (220) for transmitting the request to a server;
means (260) for providing subsequently received user manual information to the user.

14. Apparatus as claimed in claim 13, in which the providing means includes a printer.

15. A network-connectable server (130), **characterised in that** the server comprises:
means for receiving a request for user manual information relating to an image output apparatus via the network, the request containing information identifying the apparatus or its type and information identifying a function of that apparatus;
means for searching for user manual information corresponding to the received information;
means for converting resulting user manual information into a suitable data format, and
means for sending the converted user manual information to the image output apparatus.

16. A system comprising:
one or more apparatuses according to claim 13 or claim 14, and
the server of claim 15.

17. A method of providing a user manual, in an image output apparatus connected to a server to provide a user manual via a network, the method comprising:
receiving a request related to the user manual corresponding to a predetermined operation function of the image output apparatus;
creating product and function codes of the image output apparatus based on the requested information related to the user manual;
transmitting the created product and function codes to the server to provide the user manual via the network; and
receiving user manual information corresponding to the transmitted product and function codes from the server and outputting the user manual information in a predetermined format.

18. The method of claim 17, further comprising:
transmitting to the server the product and function codes with a network address of the image output apparatus and data format information supported by the image output apparatus,
or
if the request related to the user manual corresponding to the predetermined operation function of the image output apparatus is received, checking whether the operation function is included in the user manual information; and
if the operation function is not included in the user manual information, outputting an error message
or
if the user manual information is received from the server, checking whether an error exists in the user manual information; and
if the error is detected, retransmitting the request related to the user manual information to the server.

19. A method of providing a user manual of an printer, through a server connected via a network, the method comprising:
if a request related to user manual information is received from an image output apparatus via the network, receiving product and function codes of the printer;
searching for the user manual information corresponding to the received product and function codes; and
converting the searched user manual information into a predetermined data format and outputting the converted user manual information to the image output apparatus.

20. The method of claim 19, wherein the data format is determined according to a type of the image output apparatus requesting the user manual information and a data format supported by the image output apparatus,
or
adding an error detection code to the user manual information when outputting the user manual information.

21. An image output apparatus connected with a server to provide a user manual via a network, the image output apparatus comprising:
a memory which stores product and function codes of the image output apparatus; and
a controller which receives a request of user manual information of a predetermined function, transmits to the server corresponding product and function codes stored in the memory, and receives user manual information corresponding to the product and function codes from the server so as to output the user manual information.

22. A computer readable medium having a computer readable code embodied therein to provide a user manual in an image output apparatus connected to a server via a network according to a method, the method comprising:
receiving a request related to the user manual corresponding to a predetermined operation function of the image output apparatus;
creating product and function codes of the image output apparatus based on the requested information related to the user manual;
transmitting the created product and function codes to the server to provide the user manual via the network; and
receiving user manual information corresponding to the transmitted product and function codes from the server and outputting the user manual information in a predetermined format.

23. The method according to claim 22, further comprising:
considering an error to have been generated in the network or the server, if the receiving does not occur in a predetermined time; and
displaying an error message corresponding to the error generated in the network or the server
or

24. The method according to claim 23, further comprising:
checking whether an error exists in the user manual information if the request related to the user manual information is received in a predetermined time.

25. The method according to claim 24, further comprising outputting the user manual information if no error exists,
or
counting the errors in the received user manual information if an error exists;
displaying an error message, if the counted number of errors exceeds a predetermined number; and
requesting the user manual information to be retransmitted, if the counted number of errors is less than a predetermined number.

26. A computer readable medium having a computer readable code embodied therein to provide a user manual of an printer, through a server connected via a network, according to a method, the method comprising:
receiving product and function codes of the printer, if a request for user manual information is received from an image output apparatus via the network;
searching out the user manual information corresponding to the received product and function codes; and
converting the searched user manual information into a predetermined data format and outputting the converted user manual information to the image output apparatus.

27. The method according to claim 26, wherein the operation of converting the searched user manual information into a predetermined data format is determined according to a type of the image output apparatus requesting the user manual information and a data format supported by the image output apparatus,
or
adding an error detection code to the user manual information when outputting the user manual information.

28. An image output apparatus connected with a server to provide a user manual via a network, the image output apparatus comprising:
a memory to store information related to various functions, a network address of the image output apparatus, and product information of an output data format supported by the apparatus;
a network interface card to access the network;
an interface unit to modulate and demodulate a signal to perform data communication via the network;
a controller to receive a request related to user manual information of a specific function, to transmit to the server the information stored in the memory, and receive from the server user manual information according to the product information; and
a printing unit to print the user manual information of the desired function according to a print command from the controller.

29. The image output apparatus according to claim 28, wherein if the image output apparatus receives the request related to the user manual information of the specific function from the user, the image output apparatus requests product codes and function codes from the server via the network and then receives user manual information transmitted from the server to output the user manual information,
or.

30. The image output apparatus according to claim 29, further comprising a plurality of respective apparatuses connected to the server, wherein the server stores manual information corresponding to the respective apparatuses.

31. The image output apparatus according to claim 30, wherein the server analyzes the corresponding product codes and function codes of the image output apparatus and transmits the user manual information to the user.

32. A computer readable medium having a computer readable code embodied therein to provide a user manual in an image output apparatus, having a memory, connected to a server via a network according to a method, the method comprising:
receiving a request related to the user manual corresponding to a predetermined operation function of the image output apparatus;
retrieving product and function codes of the image output apparatus based on the requested information, from the memory of the image output apparatus, related to the user manual;
transmitting the created product and function codes to the server to provide the user manual via the network; and
receiving user manual information corresponding to the transmitted product and function codes from the server and outputting the user manual information in a predetermined format.

33. The method according to claim 32, further comprising:
considering an error to have been generated in the network or the server, if the receiving does not occur in a predetermined time; and
displaying an error message corresponding to the error generated in the network or the server.

34. The method according to claim 33, further comprising:
checking whether an error exists in the user manual information if the request related to the user manual information is received in a predetermined time.

35. The method according to claim 34, further comprising outputting the user manual information if no error exists,
or
counting the errors in the received user manual information if an error exists;
displaying an error message, if the counted number of errors exceeds a predetermined number; and
requesting the user manual information to be retransmitted, if the counted number of errors is less than a predetermined number.
